# FASCICULE DE BREVET EUROPEEN

(11) **EP 0 872 201 B1**
(45) Date de publication et mention de la délivrance du brevet: **13.11.2002**
(21) Numéro de dépôt: 98400936.5
(22) Date de dépôt: 15.04.1998
(51) Int. Cl.: A47J 27/21

(54) **Chauffe-liquide électrique**
Elektrisch beheiztes Wassererhitzungsgerät
Electric boiler

(30) Priorité: 17.04.1997 FR 9704771
(43) Date de publication de la demande: 21.10.1998
(73) Titulaire: SEB S.A., 69130 Ecully (FR)
(72) Inventeur: Deliens, Patrick, 39700 Dampierre (FR)
(74) Mandataire: Keib, Gérard

(56) Documents cités:
- DE-U- 8 915 662
- GB-A- 2 283 162
- GB-A- 2 299 497

## Description

La présente invention concerne une bouilloire électrique du type comprenant un récipient à couvercle et à poignée et reposant de façon amovible sur un socle d'alimentation, cette bouilloire devant permettre de chauffer de l'eau mais aussi tout autre liquide impliquant le nettoyage du récipient après usage. Une telle bouilloire répondant à cette définition élargie sera désignée ci-après par "chauffe-liquide". Une telle bouilloire est connue du document DE 8 915 662 U, qui forme la base pour la preambule de la revendication 1.

Les bouilloires à récipient détachable du socle d'alimentation comportent traditionnellement une résistance chauffante fixée au fond du récipient, et des moyens de connexion et de coupure électriques répartis entre le socle et le récipient. En particulier, les moyens de connexion du récipient comprennent des broches métalliques reliées à la résistance et destinées à s'encastrer dans le socle pour coopérer avec des moyens de connexion électrique du socle.

Le récipient d'une bouilloire traditionnelle comporte d'autre part, au titre des moyens de coupure électrique, un thermostat ou limiteur de température sensible à la température de la vapeur, basé le plus souvent sur un principe de bilame adapté pour couper l'alimentation électrique à une température prédéterminée de la vapeur. Un interrupteur extérieur à commande manuelle est prévu pour commander l'alimentation électrique de la résistance lorsque le récipient est placé sur le socle. L'interrupteur devant permettre d'armer l'élément bimétallique du thermostat, il est généralement placé à proximité de ce dernier, à la partie supérieure du récipient, par exemple dans la poignée, comme dans le document EP-A-254 482, ou à la partie inférieure du récipient, comme dans le document EP-A-380 416 selon lequel le thermostat est situé à la base d'un conduit d'amenée de la vapeur vers la partie inférieure du récipient.

Les moyens de coupure comprennent en outre un bloc de sécurité consistant en un détecteur de chauffe sans eau associé à un coupe-circuit qui peut être un fusible thermique. Ce bloc de sécurité est traditionnellement monté au fond du récipient.

En raison de l'impossibilité ou de la difficulté d'isoler, de manière étanche à l'eau, ces éléments de connexion et de coupure électriques, leur présence dans le récipient de la bouilloire interdit de plonger ce dernier dans l'eau. Une telle bouilloire est donc limitée à la production d'eau chaude et exclut tout autre usage qui nécessiterait un nettoyage du récipient.

De même, les documents GB 2 283 162 et GB 2 299 497 décrivent une bouilloire dans laquelle la résistance électrique chauffante s'étend dans le récipient. Un tel récipient peut difficilement être immergé dans l'eau et ne peut en aucun cas être mis au lave-vaisselle pour faciliter son nettoyage.

La présente invention a pour but la réalisation d'une bouilloire électrique pouvant être utilisée comme chauffe-liquide.

Ainsi, le chauffe-liquide visé par l'invention comprend traditionnellement un récipient à liquide muni d'un couvercle et d'une poignée et reposant de façon amovible sur un socle d'alimentation électrique. Il comprend également une résistance chauffante et des moyens de coupure de l'alimentation électrique de la résistance, parmi lesquels un interrupteur extérieur à commande manuelle, un thermostat sensible à la température de la vapeur et un coupe-circuit de détection de chauffe sans eau dit coupe-circuit de sécurité.

Suivant l'invention, ce chauffe-liquide est caractérisé en ce que l'ensemble desdits moyens de coupure et la résistance chauffante sont intégrés au socle.

Un premier avantage résultant de l'intégration du thermostat sensible à la vapeur dans le socle, est l'élimination de toute liaison électrique ou thermique entre la base du récipient et la poignée.

D'autre part, le récipient ainsi dépourvu d'éléments électriques peut être plongé dans l'eau en toute sécurité ou même mis au lave-vaisselle.

L'ensemble des moyens de connexion et de coupure électriques se trouve dans le socle, le récipient ne portant plus que des moyens favorisant sa liaison thermique avec la résistance intégrée au socle. Un tel récipient autorise son nettoyage en lave-vaisselle.

Dans un mode de réalisation préférée de l'invention, le coupe-circuit de sécurité est monté en contact avec la face intérieure d'une paroi métallique du socle, dont la face extérieure affleure sur le socle, le fond du récipient comportant une plaque métallique en contact thermique avec la résistance et avec ladite face extérieure de ladite paroi métallique du socle quand le récipient repose sur le socle.

Cette réalisation est particulièrement adaptée aux bouilloires ou chauffe-liquide à fond chauffant, dans lesquels la résistance est isolée de manière étanche tant de la partie contenant du récipient que de l'extérieur. De tels récipients à fond chauffant comportent ainsi une plaque métallique en contact avec la résistance, cette plaque métallique étant adaptée à venir en contact avec une paroi métallique du socle destinée à transmettre au coupe-circuit de sécurité logé dans le socle la température de ladite plaque métallique du récipient.

Avantageusement, la paroi métallique du socle constitue le fond d'une capsule montée élastiquement dans le socle. Cette disposition assure un contact obligatoire entre ladite plaque métallique du récipient en contact avec la résistance et ladite paroi métallique du socle, dès lors que le récipient repose sur le socle, ceci afin que les conditions de fonctionnement du coupe-circuit de sécurité soient toujours réalisées.

D'autres particularités et avantages de l'invention apparaîtront encore dans la description ci-après.

Au dessin annexé donné à titre d'exemple non limitatif:

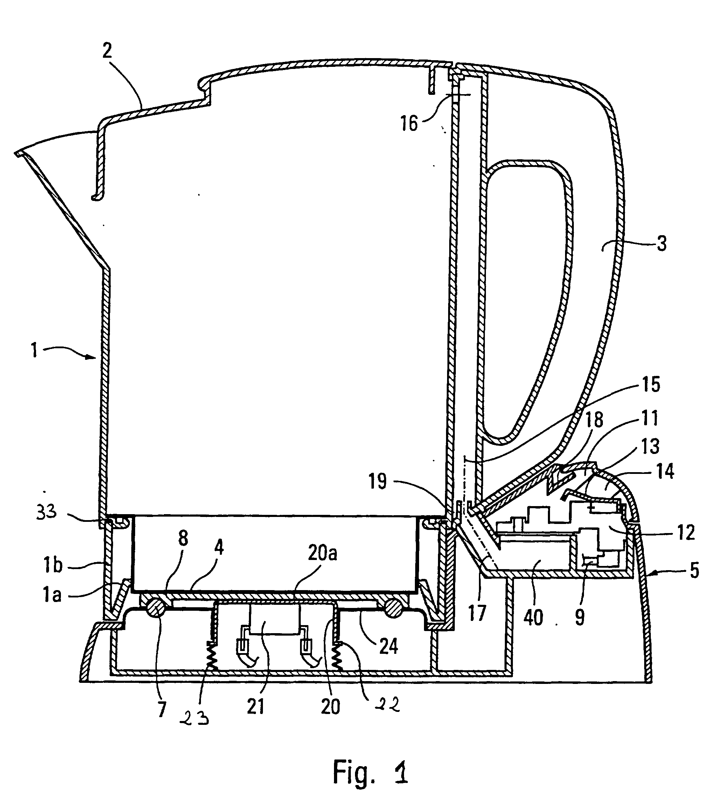

- la figure 1 est une vue en coupe longitudinale d'un chauffe-liquide conforme à l'invention, la résistance chauffante étant intégrée au socle.

En référence à la figure, le chauffe-liquide moulé en matière plastique comprend un récipient à liquide 1 de section transversale sensiblement ronde, fermé par un couvercle 2 et muni d'une poignée 3. Le récipient 1 repose de façon amovible, par un fond 1a, sur un socle 5 comportant des moyens d'alimentation de la résistance chauffante électrique 7. Le fond 1a est un fond chauffant comprenant une coupelle métallique 4 dont la surface intérieure est en contact avec le liquide à chauffer. Une jupe 1b, fermée par le fond 1a, prolonge le corps du récipient au-delà de la coupelle métallique 4. Un joint 33 assure l'étanchéité de la partie inférieure 1a, 1b du récipient située sous la coupelle métallique 4.

On va maintenant décrire dans ses implications structurelles et fonctionnelles le mode d'intégration au socle des éléments de coupure de l'alimentation électrique.

Le socle 5 comporte, au droit de la poignée 3 du récipient 1, un logement 11 dans lequel est fixé un thermostat 12 du type à bilame sensible à la température de la vapeur. Un élément métallique 13 du bilame, susceptible d'être réarmé, est rendu solidaire d'un interrupteur 14 permettant de contrôler manuellement l'alimentation électrique de la résistance chauffante 7. Le thermostat 12 est relié au circuit d'alimentation par des conducteurs électriques 9 raccordés au réseau par un cordon d'alimentation non représenté.

En vue d'amener jusqu'au thermostat 12 la vapeur se formant à la surface du liquide en train de chauffer dans le récipient 1, ce dernier comporte, adjacent à la poignée 3, un conduit 15 s'étendant sensiblement sur toute la hauteur du récipient. Le conduit 15 communique à sa partie supérieure avec l'intérieur du récipient par un orifice 16 situé au-dessus du niveau de remplissage maximum, et débouche à sa partie inférieure située sensiblement à la base de la poignée 3, en regard d'un conduit 17 ménagé dans le socle 5. Le conduit 17, disposé selon un axe incliné qui le maintient à l'écart de la zone chaude de la partie du socle 5 accueillant le fond chauffant du récipient 1, débouche à son tour dans une chambre 40 communiquant avec le logement 11 où est fixé le thermostat 12. Un orifice 18 à la partie supérieure du logement 11 permet l'évacuation de la vapeur. Le conduit 15 du récipient comporte à sa partie inférieure un retour ou gorge annulaire 15, formant gouttière pour retenir l'eau de condensation susceptible de se former sur les parois du conduit 15 ou l'eau résiduelle après nettoyage du récipient.

Le socle 5 comporte par ailleurs, au droit du fond chauffant 4 du récipient, un élément métallique 20 se présentant sous la forme d'une capsule de section sensiblement ronde, dont la paroi de fond 20a affleure à la surface extérieure du socle. La paroi 20a porte sur sa face intérieure un bloc de sécurité standard 21, du type comportant un détecteur de chauffe sans eau associé à un coupe-circuit tel qu'un fusible, et relié au circuit d'alimentation par les conducteurs 9. La capsule métallique 20 est montée par un rebord annulaire 22 sur un ressort 23 fixé au fond du socle 5, de manière à venir en appui élastique, directement ou par l'intermédiaire d'une pièce métallique bonne conductrice thermique, contre le fond chauffant 4 du récipient 1. La capsule 20, portant d'un côté le bloc de sécurité 21, de l'autre le récipient 1, sert ainsi d'interface pour transmettre la température du fond chauffant 4 au détecteur de température du bloc de sécurité 21, destiné à couper le circuit d'alimentation en cas de dépassement du seuil de température admis, autrement dit quand le récipient 1 chauffe à vide.

Conformément à l'invention, la résistance 7 est encastrée dans une gorge d'un support métallique 24 du socle 5 dont elle fait saillie. Le fond chauffant 4 du récipient 1 porte sur sa surface extérieure un diffuseur thermique 8 comportant une gorge symétrique de celle du support métallique 24, pour permettre à la résistance 7 de s'y encastrer quand on pose le récipient 1 sur le socle 5, et ainsi garantir une bonne transmission de la chaleur au fond 4 du récipient.

Dans ce mode de réalisation, le récipient 1 ne comporte plus aucun élément de contact électrique. Aucun joint d'étanchéité n'est nécessaire sur le fond 1a du récipient, et ce dernier récipient peut être immergé dans l'eau et mis au lave-vaisselle en toute sécurité.

L'intégration de la résistance 7 au socle 5 permet en outre d'augmenter la capacité du récipient 1. En effet, la jupe 1b n'ayant pas de fonction de protection à l'égard de la résistance, sa hauteur s'en trouve diminuée d'autant.

Lorsqu'on pose le récipient 1 sur le socle 5, le diffuseur thermique 8 vient en contact avec la paroi 20a de la capsule métallique. Le cordon d'alimentation du socle 5 étant branché sur le réseau, il suffit d'enclencher l'interrupteur 14 pour mettre le chauffe-liquide en service. La résistance 7 alimentée chauffe le diffuseur thermique 8 qui répartit la chaleur sur le fond chauffant 4 pour chauffer l'eau ou le liquide du récipient 1. A l'ébullition du liquide, la vapeur produite est amenée par les conduits 16, 17 en regard jusqu'au thermostat 12 qui, dès lors, coupe le circuit d'alimentation en repoussant l'interrupteur 14 dans sa position initiale hors circuit. Si le récipient chauffe à vide, par suite de l'évaporation du liquide ou parce qu'on a oublié de le remplir, le bloc de sécurité 21 détecte la température de la résistance 7 par l'intermédiaire de la paroi métallique 20a en contact avec le diffuseur thermique 8, et coupe le circuit.

Bien entendu, l'invention n'est pas limitée aux exemples de réalisation que l'on vient de décrire et on peut apporter à ceux-ci de nombreuses modifications sans sortir du cadre de l'invention telle que défini par les revendications.

## Revendications

1. Chauffe-liquide électrique comprenant un récipient à liquide (1) muni d'un couvercle (2) et d'une poignée (3) et reposant de façon amovible sur un socle (5) d'alimentation électrique, comprenant en outre une résistance chauffante (7) et des moyens de coupure de l'alimentation électrique de la résistance, ces moyens de coupure comportant un interrupteur extérieur (14) à commande manuelle, un thermostat (12) sensible à la température de la vapeur et un coupe-circuit de détection de chauffe sans eau dit coupe-circuit de sécurité (21), **caractérisé en que** l'ensemble desdits moyens de coupure (12, 14, 21) et la résistance chauffante sont intégrés au socle (5).

2. Chauffe-liquide électrique conforme à la revendication 1, **caractérisé en ce que** le fond (1a, 4) du récipient porte une plaque métallique (8) bonne conductrice thermique, apte à recevoir par encastrement la résistance chauffante (7) solidaire du socle (5).

3. Chauffe-liquide électrique conforme à la revendication 1 ou 2, **caractérisé en ce que** ledit thermostat (12) est logé dans une partie (11) du socle s'étendant au droit de la poignée (3), et **en ce qu'**un conduit (15) de passage de la vapeur s'étend sensiblement sur toute la hauteur du récipient (1) du côté de la poignée (3), pour déboucher à sa partie inférieure en regard d'un conduit (17) du socle débouchant à son tour sur ledit thermostat (12).

4. Chauffe-liquide électrique conforme à la revendication 3, **caractérisé en ce que** le conduit (15) du récipient (1) comporte à sa partie inférieure des moyens (19) formant gouttière.

5. Chauffe-liquide électrique conforme à l'une des revendications 1 à 4, **caractérisé en ce que** le coupe-circuit de sécurité (21) est monté en contact avec la face intérieure d'une paroi métallique (20a) du socle (5), dont la face extérieure affleure sur le socle (5), et **en ce que** le fond (1a) du récipient comporte une plaque métallique (8) en contact thermique avec la résistance (7) et avec ladite face extérieure de ladite paroi métallique (20a) du socle quand le récipient (1) repose sur le socle (5).

6. Chauffe-liquide électrique conforme à la revendication 5, **caractérisé en ce que** ladite paroi métallique (20a) constitue le fond d'une capsule (20) montée élastiquement dans le socle (5).

## Claims

1. Electric boiler comprising a liquid container (1) fitted with a lid (2) and with a handle (3) and resting in a removable manner on a base (5) with an electrical supply, further comprising a heating resistor (7) and means of cutting off the electrical supply to the resistor, the cut-off means comprising a manually controlled external switch (14), a thermostat (12) sensitive to the steam temperature and a cut-off circuit for detecting heating without water, called a safety cut-off circuit (21), **characterized in that** all the said cut-off means (12, 14, 21) and the heating resistor are integrated into the base (5).

2. Electric boiler according to Claim 1, **characterized in that** the bottom (1a, 4) of the container bears- a metal plate (8) which is a good heat conductor, capable of accommodating, by fitting, the heating resistor (7) secured to the base (5).

3. Electric boiler according to Claim 1 or 2, **characterized in that** said thermostat (12) is housed in a part (11) of the base lying to the right of the handle (3), and **in that** a duct (15) for passage of the steam extends substantially over the entire height of the container (1) on the side of the handle (3), to open out at its lower part facing a duct (17) of the base opening out in its turn on the said thermostat (12).

4. Electric boiler according to Claim 3, **characterized in that** the duct (15) of the container (1) comprises, in its lower part, means (19) forming a trough.

5. Electric boiler according to one of Claims 1 to 4, **characterized in that** the safety cut-off circuit (21) is mounted in contact with the inner face of a metal wall (20a) of the base (5), the outer face of which is flush with the base (5), and **in that** the bottom (1a) of the container comprises a metal plate (8) in thermal contact with the resistor (7) and with the said outer face of the said metal wall (20a) of the base when the container (1) rests on the base (5).

6. Electric boiler according to Claim 5, **characterized in that** the said metal wall (20a) forms the bottom a capsule (20) mounted elastically in the base (5).

## Patentansprüche

1. Elektrischer Flüssigkeitserhitzer mit einem Flüssigkeitsbehälter (1), der mit einem Deckel (2) und einem Griff (3) versehen ist und lösbar auf einem Sockel (5) zur elektrischen Versorgung ruht, ferner einen Heizwiderstand (7) und Mittel zum Trennen der elektrischen Versorgung des Widerstands umfasst, wobei diese Trennmittel einen äußeren Unterbrecher (14) mit manueller Steuerung, einen auf die Dampftemperatur ansprechenden Thermostaten (12) und einen Trennkreis zum Erfassen des Erhitzens ohne Wasser, Sicherheitstrennkreis (21) genannt, umfassen, **dadurch gekennzeichnet, dass** die gesamten Trennmittel (12, 14, 21) und der Heizwiderstand im Sockel (5) integriert sind.

2. Flüssigkeitserhitzer nach Anspruch 1, **dadurch gekennzeichnet, dass** der Boden (1a, 4) des Behälters eine metallische Platte (8) mit guter Wärmeleitfähigkeit trägt, welche geeignet ist, durch Versenken den an dem Sockel (5) befestigten Heizwiderstand (7) aufzunehmen.

3. Flüssigkeitserhitzer nach Anspruch 1 oder 2, **dadurch gekennzeichnet, dass** der Thermostat (12) in einem Teil (11) des Sockels untergebracht ist, der in Flucht mit dem Griff (3) verläuft, und dass ein Gang (15) zum Dampfübertritt im wesentlichen auf der gesamten Höhe des Behälters (1) auf der Seite des Griffs (3) verläuft, um mit seinem unteren Abschnitt gegenüber einem Gang (17) des Sockels zu münden, welcher seinerseits auf dem Thermostaten (12) mündet.

4. Flüssigkeitserhitzer nach Anspruch 3, **dadurch gekennzeichnet, dass** der Gang (15) des Behälters (1) an seinem unteren Abschnitt einen Rücklauf formende Mittel (19) umfasst.

5. Flüssigkeitserhitzer nach einem der Ansprüche 1 bis 4, **dadurch gekennzeichnet, dass** der Sicherheitstrennkreis (21) in Kontakt mit der Innenseite einer metallischen Wand (20a) des Sockels (5) montiert ist, deren Außenseite auf den Sockel (5) fluchtet, und dass der Boden (1a) des Behälters eine metallische Platte (8) umfasst, die in Kontakt mit dem Widerstand (7) und mit der Außenseite der metallischen Wand (20a) des Sockels ist, wenn der Behälter (1) auf dem Sockel (5) ruht.

6. Flüssigkeitserhitzer nach Anspruch 5, **dadurch gekennzeichnet, dass** die metallische Wand (20a) den Boden einer in dem Sockel (5) elastisch montierten Kapsel (20) bildet.
